# EUROPEAN PATENT APPLICATION

(11) **EP 1 274 028 A1**
(43) Date of publication of application: **08.01.2003**
(21) Application number: 01905584.7
(22) Date of filing: 22.01.2001
(51) Int. Cl.: G06F 17/60

(54) **SYSTEM AND METHOD OF ELECTRONIC TRANSACTION**

(30) Priority: 03.02.2000 CN 00100771
(71) Applicant: Lee, Kuan-Lin, Taiwan 300 (CN); Appleton, Jack, Los Angeles, CA 91601 (US)
(72) Inventor: LEE, Kuan-Lin, Taiwan 300 (CN); APPLETON, Jack, Los Angeles, CA 91601 (US); WU, Chen-Sheng, Hsinchu, Taiwan 300 (CN); KUO, Chun-Hsien, Hsinchu Taiwan 300 (CN)
(74) Representative: Vigars, Christopher Ian
(86) International application number: CN0100096
(87) International publication number: WO01061578

(57) **Abstract**

An electronic commercial trading process. The process includes the execution of electronic process for opening accounts, entering into a server individually from a first user end and a second user end using a digital mobile communication device. The communication device has a first identification number and a second identification number, and then the password (PIN) for the server is set from the user end using the communication device, and the financial account is provided to the user according to the identification number and the password. The electronic commercial trading process is executed, including the steps of sending the identification number to the server from the user end using the communication device to identify the financial account, and then entering a second financial account of the second user end, a dollar amount of the transaction, and the first password to the server from the user end using the communication device to complete the trade.

## Description

### BACKGROUND OF THE INVENTION

### Field of the Invention

The present invention relates to a commercial trading system and process, and more particularly, to an electronic commercial trading system and process.

### Description of the Prior Art

Current commercial trading methods are basically divided into the following types:
(1) Customer-to-Customer (C to C) Commerce, which primarily uses cash
(2) Business-to-Customer (B to C) Commerce, which primarily uses cash or credit cards

However, compared with present popular electronic commercial trading via network, the aforementioned traditional trading methods are very inconvenient. Current auction websites conduct a lot of C-to-C trading which cannot use cash only, while individual sellers cannot accept credit cards. Therefore, it constitutes a hindrance to the trading. Even in B-to-C trading, the risk of using credit cards via network is still very high. Although a system using SET authentication to control the risks of credit card use has been developed, the cost is high and the method has yet to become popular.

At present, there are network banks, but they as well have limited popularity, since use is complicated.

In addition, multinational trading is very popular via network, creating more and more transactions using different currencies. Thus, if an electronic commercial server can be provided to serve as the platform for multinational trading and a commonly used tool is selected, it will greatly eliminate the inconvenience of electronic commercial trading.

### SUMMARY OF THE INVENTION

The present invention relates to an electronic commercial trading process, comprising the steps of entering a commercial trading server individually from first and second user ends using first and second digital mobile communication devices, wherein each of the first and second digital communication devices has first and second identification numbers, setting first and second passwords to the commercial trading server from the first and second user ends using the first and second mobile communication devices. The commercial trading server provides first and second financial accounts to the first and second user ends according to the first and second identification numbers and the first and second passwords, and the electronic commercial trading process is executed including the steps of sending the first identification number to the commercial trading server from the first user end using the first digital mobile communication device to enter the commercial trading server to identify the first financial account, and then inputting a second financial account of the second user end, the dollar amount of the transaction, and the first password to the commercial trading server from the first user end using the first digital mobile communication device in order to complete the trade.

Another embodiment of the present invention comprises execution of the electronic process for opening accounts comprising entering a commercial trading server from first and second user ends individually using first and second digital mobile communication devices, wherein each of the first and second digital mobile communication devices has first and second identification numbers, and setting of the first and second passwords (PIN) for the commercial trading server from the first and second user ends by the first and second digital mobile communication devices. The commercial trading server provides first and second financial accounts to the first and second user ends according to the first and second identification numbers and the first and second passwords, and the electronic trading process is executed, including the steps of entering a commercial trading server from the first user end using a computer and inputting a first financial account, a second financial account, and a dollar amount of the transaction to the commercial trading server, sending an inquiry message from the commercial trading server via a mobile communication network to a first digital mobile communication device, sending a first identification number to the commercial trading server from the first user end using the first digital mobile communication device to identify the first financial account fromthe commercial trading server, and inputting preset trading information and password to the commercial trading server from the first user end using the first digital mobile communication device, in order to complete the trade.

The aforementioned methods have the following features:
1. An electronic commercial trading server is provided to integrate the C to C, B to C, or B to B trading.
2. A substituting function between cash and credit card is provided.
3. Digital mobile communication devices are used to enter into the operations of electronic commercial trading.
4. A platform is provided for multinational trading.

The primary objective of the present invention is to provide a new electronic commercial trading process that provides an electronic commercial trading server to integrate the C-to-C or B-to-B trading, the substituting function between cash and credit card so that the entire digital mobile device can enter into the electronic commercial operation, and a multinational trading platform.

### BRIEF DESCRIPTION OF THE DRAWINGS

Other objects, features, and advantages of the invention will become apparent from the following detailed description of the preferred but non-limiting embodiments. The description is made with reference to the accompanying drawings, in which:
Fig. 1A is a flowchart of the process of opening an electronic account.
Fig. 1B is a diagram of the system architecture of the process of opening and electronic account according to the embodiment shown in Fig. 1A.
Fig. 2A is a flowchart of the process of opening an electronic account.
Fig. 2B is a diagram of the system architecture of the process of opening and electronic account according to the embodiment shown in Fig. 2A.
Fig. 3A is a flowchart of the process of the electronic commercial trading.
Fig. 3B is a diagram of the system architecture of the process of the electronic commercial trading according to the embodiment shown in Fig. 3A.
Fig. 4A is a flowchart of the process of the electronic commercial trading.
Fig. 4B is a diagram of the system architecture of the process of the electronic commercial trading according to the embodiment as shown in Fig. 4A.

### DETAILED DESCRIPTION OF THE INVENTION

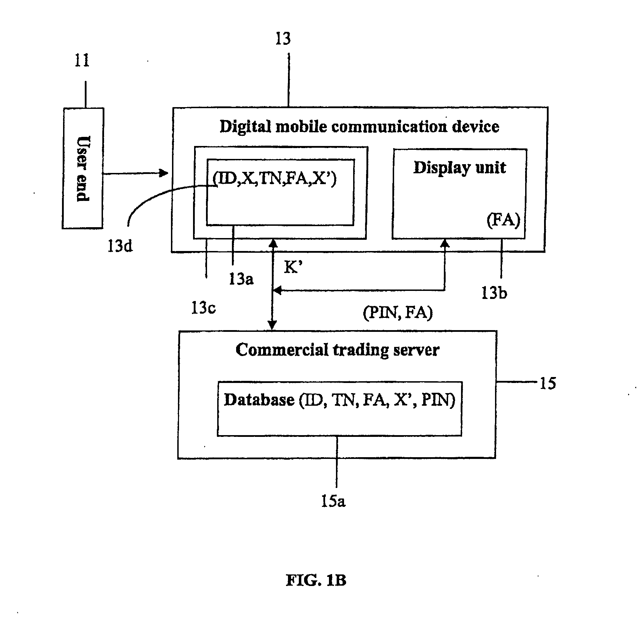

Fig. 1B shows the electronic commercial system for opening accounts, comprising a digital mobile communication device 13 having an identification number 13d and a commercial trading server 15 to execute the electronic process of opening accounts from an user end 11.

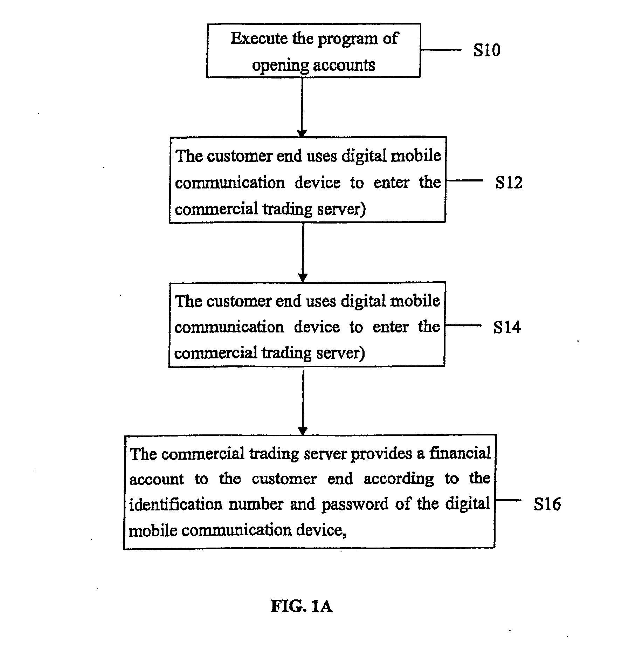

Fig. 1B and Fig. 1A shows an electronicprocess S10 for opening accounts entering the commercial trading server 15 from the user end 11 to apply for a financial account FA, comprising the steps of:

In Step S12, a digital mobile communication device 13 having an identification number 13d such as a mobile phone, a PDA, or a computer device with mobile phone as the communication interface is used to enter a commercial trading server 15 from the user end 11.

Then, in Step S14, a password (PIN) is set for the commercial trading server 15 from the user end 11 through the digital mobile communication device 13.

And then, in Step S16, the commercial trading server 15 provides a financial account FA to the user end 11 according to the identification number 13d and password (PIN) to complete the electronic process of opening accounts.

The aforementioned identification number 13d is a mobile phone number TN, saved by the mobile phone system company or by the user end.

The aforementioned identification number 13d can also be a user identification module number ID, saved into the user identification module by the mobile phone system company.

The commercial trading server 15 generates at least one server authentication key K' according to the identification number 13d to be saved into the memory unit 13c, such that the computed result of combining the authentication key K' is used to identify the financial account FA when the electronic trading process is run at the user end 11.

The commercial trading server 15 further generates an authentication combination according to the identification number 13d for identifying the financial account FA when the electronic trading process is entered from the user end 11.

According to the above description, the commercial trading server 15 can arbitrarily select the identification module number ID, telephone number TN, the computed result of combining the authentication key K', and the financial account FA as the for identifying the financial account FA when the electronic trading process is run at the user end 11.

Furthermore, the commercial trading server will determine the selection method of the aforementioned authentication combination according to the dollar amount of the transaction. The larger the trading amount, the wider the selection element of the authentication combination.

The commercial trading server 15 can change the authentication combination periodically, or each time the electronic trading process is run, identifying the financial account FA next time the electronic trading process is run at the user end 11.

Figure 1B shows the user end 11 entering the commercial trading server 15 to apply for a financial account from the electronic system for opening accounts, which comprises a user end 11, a digital mobile communication device 13 and a commercial server 15.

The user end 11 uses a digital mobile communication device 13 such as a mobile phone having user identification module or PDA combining mobile phone, or computer device having a mobile phone as communication interface to enter the commercial trading server 15, wherein the digital mobile communication device 13 has a user identification module 13a, recorded in a storage unit 13c including an identification number 13d such as the identification module number ID, and a system authentication key K (set up by the system company when the user applies for a mobile communication device) ; moreover, the digital mobile communication device 13 further has a display unit 13b for displaying information input at the user end 11 and displaying messages from the commercial server 15, wherein a database 15a for recording basic personal information input at the user end.

Furthermore, the user end 11 can set up the password (PIN) for the commercial trading server through the digital communication device 13 to be saved into the database 15a.

The commercial trading server 15 provides a financial account FA to the user end 11 according to the identification number, which can be saved in the memory 13c and displayed on the display unit 13b to complete the electronic process for opening accounts.

The aforementioned identification number 13d is a mobile phone number TN, saved into the memory 13c by the mobile phone system company or from the user end.

The aforementioned identification number 13d can also be a user identification module number ID, saved into the storage unit 13c by the mobile phone system company.

The commercial trading server generates at least one server authentication key K' according to the identification number 13d, saved into the user identification module such that the computed result of combining the authentication key K' identifies the financial account FA when the electronic trading process is run at the user end 11.

From the above description, the commercial trading server 15 can arbitrarily select the identification module number ID, telephone number TN, the computed result of combining the server authentication key K' and financial account FA as the for identifying the financial account FA when the user 11 enters the electronic trading process.

As well, the commercial trading server determines the selection method of the foregoing authentication combination according to the dollar amount of the transaction.

The commercial trading server 15 can change the authentication combination periodically, or each time the electronic trading process is run, identifying the financial account FA next time the electronic trading process is run at the user end 11.

In other words, after the user end completes the electronic process of opening accounts, the memory 13c of the digital mobile communication device 13 stores an identification module number ID, system authentication key K, telephone number TN, server authentication key K', and financial account FA, and other values. The database of the commercial server 15 stores the identification module number ID, telephone number TN, server authentication key K, financial account FA, and password PIN, and other values.

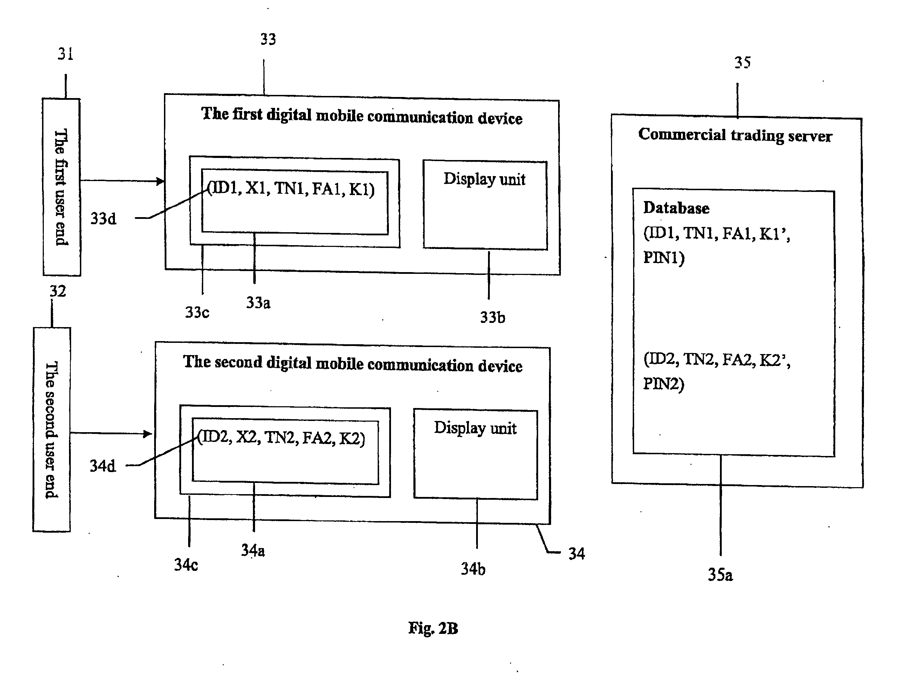

Figure 2B shows an electronic trading system, comprising first and second digital mobile communication devices 33, 34, having first and second identification numbers 33d, 34d, and a commercial trading server 35 for executing the following electronic commercial trading process from first and second user ends 31, 32.

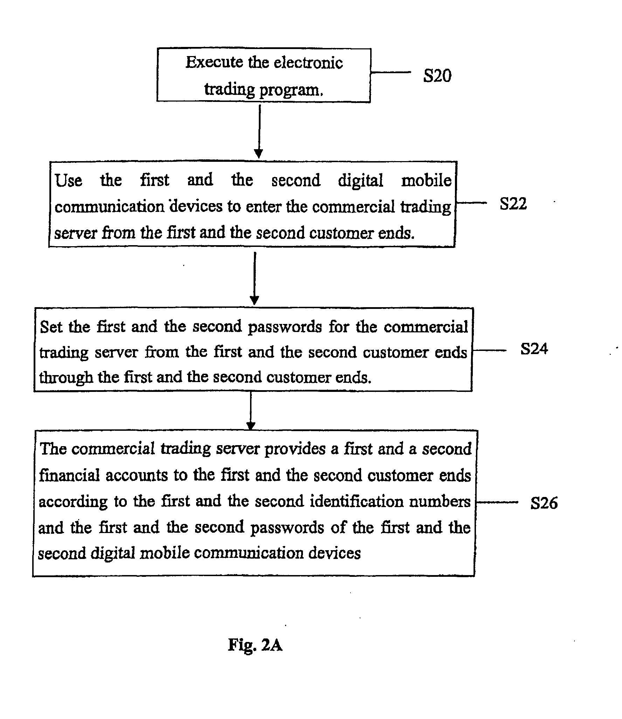

Figure 2A and Figure 2B show a first user end 31 and a second user end 32 as trading parties, individually entering the commercial trading server to open accounts before doing any electronic commercial trading. Opening of accounts and system shown in Figures 1A and 1B are also applicable for the following embodiment.

In this embodiment, the electronic process for opening accounts S20 is run by the trading parties, i.e. the first user end 31 and the second user end 32 as follows.

In Step S22, the first and second user ends 31, 32 individually use first and second digital mobile communication devices 33,34 to enter a commercial trading server 35, in which each of the first and second digital mobile communication devices 33, 34 has first and second identification numbers 33d, 34d.

In Step S24, first and second passwords PIN1, PIN2 are set for the commercial trading server 35 from the first and second user ends through the first and second digital mobile communication devices 33, 34.

In Step S26, the commercial trading server 35 provides first and second financial accounts FA1, FA2 to the first and second user ends 31, 32 according to the first and second identification numbers 33d, 34d and the first and second passwords PIN1, PIN2.

Each of the digital mobile communication devices 33, 34 has a user identification module 33a, 34a, recorded in a storage unit 33c, 34c, including an identification number 33d, 34d such as the identification module numbers ID1, ID2 and a system authentication key K1, K2 (set up by the system company when the user applies for the mobile communication device). The digital mobile communication device 33, 34 further has a display unit 33b, 34b for displaying information input at the user ends 31, 32 and information from the commercial server 35, wherein a database 35a records information input from the user end.

Further, the user ends 31, 32 can set up the passwords PIN1, PIN2 to the commercial trading server 35 through the digital mobile communication devices 33, 34 and save them into the database 35a.

The commercial trading server 35 provides a financial account FA1, FA2 to the user end 31, 32 respectively according to the identification number 33d, 34d and the password PIN, PIN2, which can be saved in the storage unit 33c, 34c and displayed on the display unit 33b, 34b to complete the electronic process of opening accounts.

The aforementioned identification number 33d, 34d is a mobile phone TN1, TN2 stored into the memory 33c, 34c by the mobile phone system company into the user identification module 33a, 34a or by the user end.

The aforementioned identification number 33d, 34d can also be a user identification module number ID1, ID2, stored in the user identification module 33a, 34a by the mobile phone system company.

The commercial trading server 35 generates at least one server authentication keyK1', K2' according to the identification number 33d, 34d, and saves the authentication keys into the storage unit 33c, 34c such that the computed result of combining the authentication key K1', K2' identifying the financial account FA1, FA2 when the electronic trading process is run at the user end 31, 32.

The commercial trading server 35 generates an authentication combination according to the identification number 33d, 34d identifying the financial account FA1, FA2 when the electronic trading process is run at the user end 31, 32.

According to the above description, the commercial trading server 35 can arbitrarily select the identification module number ID1, telephone number TN1, the computed result of combining the server authentication key K1' and the financial account FA1 to identify the financial account FA1 when the electronic trading process is run at he user end 31.

According to the above description, the commercial trading server 35 can arbitrarily select the identification module number ID2, telephone number TN2, computed result of combining the server authentication key K2' and the financial account FA2 to identify the financial account FA2 when the electronic trading process is run at the user end 32.

Furthermore, the commercial trading server 35 determines the selection method for the aforementioned authentication combination according to the dollar amount of the transaction.

The commercial trading server 35 can change the authentication combination periodically, or each time the electronic trading process is run, identifying the financial account FA1, FA2 when the electronic trading process is run at the user end 31, 32.

In other words, after the user end completes the electronic process for opening accounts, the memory unit 33c of the digital mobile communication device 33 stores an identification module number ID1, a system authentication key K1', a computer number TN1, server authentication key K1'and a financial account FA1, and other values.

The memory unit 34c of the digital mobile communication device 34 stores an identification module number ID2, a system authentication key K2, a computer number TN2, a server authentication key K2', and a financial account FA2, and other values.

The database 35a of the commercial server 35 stores an identification module number ID1, a telephone number TN1, a server authentication key K1', a financial account FA1, and a password PIN1, and other values, and an identification module number ID2, a telephone number TN2, a server authentication key K2', a financial account FA2, and a password PIN2, and other values.

After the user end completes the electronic process for opening accounts, it can run the electronic trading process as described below.

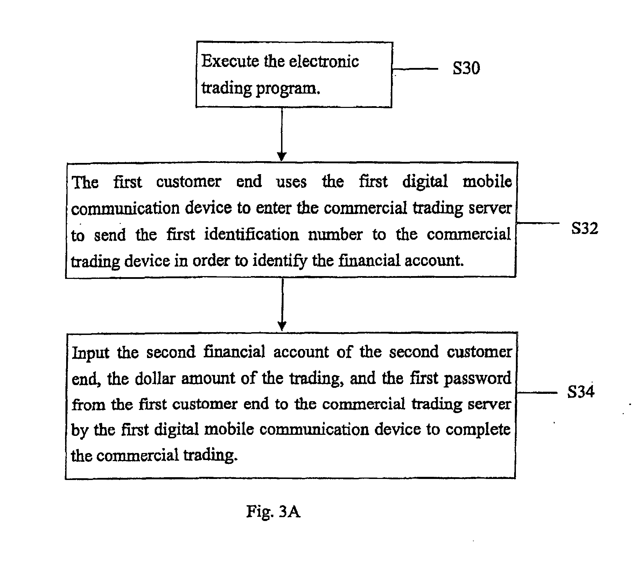

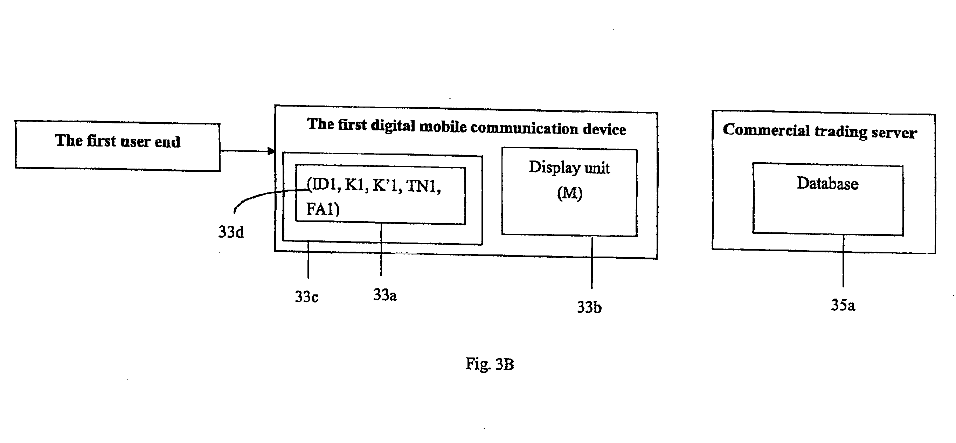

Figures 3A and 3B show the electronic trading process S30.

In Step S32, the first user end 31 uses the first digital mobile communication device 33 to enter the commercial trading server 35 and sends the first identification number 33d stored in the storage unit 33c to the commercial trading server 35 to identify the first financial account FA1.

In Step S34, the first user end 31 uses the first digital mobile communication device 33 to input the financial account FA2 of the second user end and the dollar amount of the transaction, and display such information on the display unit 33b, and input the first password PIN1 to the commercial trading server 35 to complete the trade.

The aforementioned commercial trading server 35 generates an authentication combination according to the identification number 33d identifying the financial account FA1 when the electronic trading process is run at the user end 31.

According to the above description, the commercial trading server 35 can arbitrarily select the identification module number ID1, telephone number TN1, the computed result of combining the server authentication key K1' and the financial account FA1 to identify the financial account FA1 when the electronic trading process is run at the user end 31.

Furthermore, the commercial trading server 35 determines the selection method for the authentication combination according to the dollar amount M of the transaction.

The commercial trading server 35 can change the authentication combination periodically, or each time the electronic trading process is run, identifying the financial account FA1 when the electronic trading process is run at the user end 31.

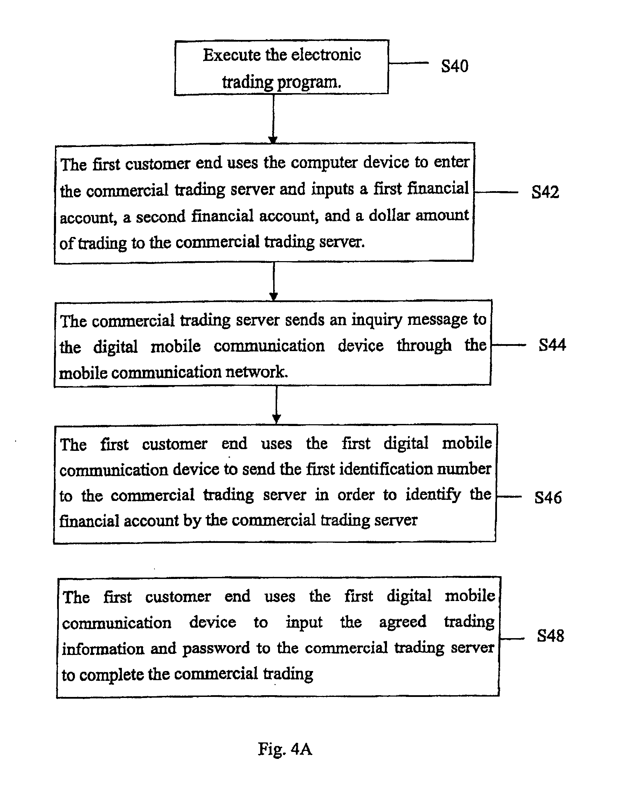

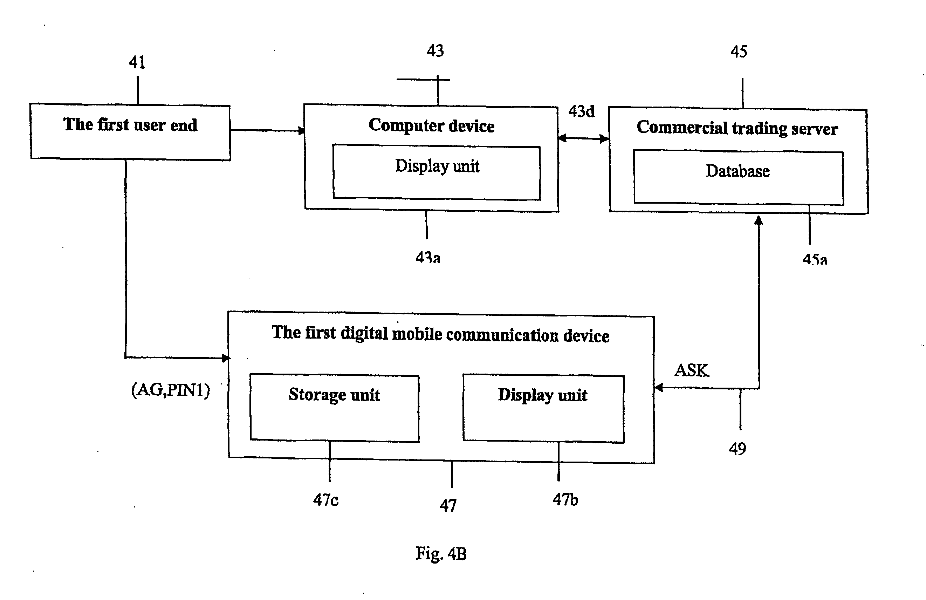

Figures 4A and 4B show another method of the electronic trading process. In addition to the first and second digital mobile communication devices and the commercial trading server for executing the foregoing electronic process for opening accounts, uses a computer device 43 to further execute the electronic trading process S40 as shown in the following steps.

First, in Step S42, the first user end 41 uses the computer device 43 to enter the commercial trading server 45 and input the first financial account FA1, the second financial account FA2, the dollar amount M of the transaction (all shown on the display unit 43a) into the commercial trading server 45.

Then, in Step S44, the commercial trading server 45 sends an inquiry message ASK to the first digital mobile communication device 47 from the mobile communication network 49.

Then, in Step S46, the first user end 41 uses the first digital mobile communication device 47 to send the first identification number 43d to the commercial trading server 45 such that the commercial trading server 45 can identify the first financial account FA1.

Then, in Step S48, the first user end 41 uses a digital mobile communication device 47 to input the agreed trading information AG and the password PIN1 to the commercial trading server 45 to complete the trade.

In addition, the password PIN input into the aforementioned electronic process for opening accounts could be a string of numeric or text codes, but also abiometric identifying feature such as fingerprint or voice print.

The system used for the foregoing digital mobile communication device having the user identification module can be high-end GSM (Global System for Mobile Communications) system, CDMA (Code Division Multiple Access) system, DAMPS (North American Digital Advanced Mobile Phone Service, IS-136) system, or a low-end wireless telecommunication system such as the CT2 (Cordless Telephone, Second generation) system, DECT (Digital Enhanced Cordless) system, or the PHS (Personal Handy Phone System) system.
While the invention has been described by way of examples and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. An electronic commercial process for opening accounts, comprising the steps of:
entering a commercial trading server from a user end using a digital mobile communication device, the digital mobile communication device having an identification number;
setting a password for the commercial trading server from the user end via the digital mobile communication device;
the commercial trading server providing a financial account to the user end according to the identification number and password to complete the electronic commercial process for opening accounts.

2. An electronic commercial process for opening accounts as claimed in claim 1, wherein the identification number is a mobile phone number.

3. An electronic commercial process for opening accounts as claimed in claim 1, wherein the identification number is a user identification module number.

4. An electronic commercial process for opening accounts as claimed in claim 1, the commercial trading server further generating at least one authentication key according to the identification number such that a computation result of combining the authentication key is used to identify the financial account when entering the electronic commercial trading process from the user end.

5. An electronic commercial process for opening accounts as claimed in claim 1, wherein the commercial trading server selects the identification number and the financial account to identify the financial account when the electronic commercial trading process is run from the user end.

6. An electronic commercial process for opening accounts as claimed in claim 5, wherein the commercial trading server determines the selection method of the authentication combination according to the dollar amount of the transaction.

7. An electronic commercial process for opening accounts as claimed in claim 5, wherein the commercial trading server changes the authentication combination periodically.

8. An electronic commercial process for opening accounts as claimed in claim 7, wherein the commercial trading server changes the authentication combination each time the electronic trading process is run at the user end, identifying the financial account the next time the electronic trading process is run at the user end.

9. An electronic commercial process for opening accounts as claimed in claim 1, wherein the password is numeric code, text code, biometric identifying feature, or a combination thereof.

10. An electronic commercial process for opening accounts as claimed in claim 1, wherein the user end uses a mobile phone, mobile PDA, a computer device with mobile phone, or a combination thereof as the communication interface for the mobile communication device.

11. An electronic commercial process for opening accounts as claimed in claim 1, wherein the user end uses GSM, CDMA, DAMPS, CT2, DECT, PACS, or PHS for the mobile communication device.

12. An electronic commercial trading method, comprising the steps of:
(a) executing an electronic process of opening an account, comprising entering into a commercial trading server individually from first and second user ends using first and second digital mobile communication devices, wherein each of the first and second digital mobile communication devices has first and second identification numbers; setting first and second passwords (PIN) for the commercial trading server from the first and second user ends through the first and second digital mobile communication devices; the commercial trading server providing first and second financial accounts to the first and second user ends according to the first and second identification numbers and the first and second passwords; and
(b) executing an electronic trading process, comprising entering into the commercial trading server from the first user end using the first digital mobile communication device to send the first identification number to the commercial trading server to identify the first financial account; entering the second user end from the first user end using the first digital mobile communication device to enter the second financial account, dollar amount of the transaction, and the first password into the commercial trading server in order to complete the trade.

13. An electronic commercial trading method as claimed in claim 12, wherein each of the first and second passwords is numeric code, text code, biometric identifying feature, or a combination thereof.

14. An electronic commercial trading method as claimed in claim 12, wherein the first and second user ends use mobile phone, mobile PDA, a computer device with mobile phone as communication interface, or a combination thereof for the first and second mobile communication devices.

15. An electronic commercial trading method as claimed in claim 12, wherein the first and second user ends use GSM, CDMA, DAMPS, CT2, DECT, PACS, or PHS for the first and second mobile communication devices.

16. An electronic commercial trading method, comprising the steps of:
(a) executing an electronic process of opening an account, comprising entering into a commercial trading server individually from first and second user ends using first and second digital mobile communication devices, wherein each of the first and second digital mobile communication devices has first and second identification numbers; setting first and second passwords (PIN) for the commercial trading server from the first and second user ends through the first and second digital mobile communication devices; the commercial trading server providing first and second financial accounts to the first and second user ends according to the first and second identification numbers and the first and second passwords; and
(b) executing an electronic trading process, comprising entering the commercial trading server from the first user end using a computer device to send a first financial account, a second financial account, dollar amount of the transaction to the commercial trading server; the commercial trading server sending an inquiry message to the first digital mobile communication device through a mobile communication network; and the first user end using the first digital mobile communication device to send the first identification number to the commercial trading server to identify the first financial account by the commercial trading server; the first user end using the first mobile communication device to input preset trading information and password to the commercial trading server in order to complete the trade.

17. An electronic commercial trading method as claimed in claim 16, wherein each of the first and second passwords is numeric code, text code, biometric identifying feature, or a combination thereof.

18. An electronic commercial trading method as claimed in claim 16, wherein the first and second user ends use a mobile phone, mobile PDA, a computer device with mobile phone as communication interface, or a combination thereof for the first and second mobile communication devices.

19. An electronic commercial trading method as claimed in claim 16, wherein the first and second user ends use GSM, CDMA, DAMPS, CT2, DECT, PACS, or PHS for the first and second mobile communication devices.

20. An electronic commercial system for opening accounts, comprising:
a digital mobile comniunication device, having an identification number;
a commercial trading server, for executing process by a user end, the process comprising:
entering a commercial trading server using a digital mobile communication device;
setting a password to the commercial trading server from the user end through the digital mobile communication device;
providing a financial account to the user end from the commercial trading server according to the identification number and password to complete the electronic process of opening accounts.

21. An electronic commercial system for opening accounts as claimed in claim 20, wherein the identification number is amobilephone number.

22. An electronic commercial system for opening accounts as claimed in claim 20, wherein the identification number is a user identification module number.

23. An electronic commercial system for opening accounts as claimed in claim 20, wherein the commercial trading server generates at least one authentication key according to the identification number such that a computation result of combining the authentication key is used to identify the financial account when entering the electronic commercial trading process from the user end.

24. An electronic commercial system for opening accounts as claimed in claim 20, wherein the commercial trading server selects the identification number and the financial account to identify the financial account when the electronic commercial trading process is run from the user end.

25. An electronic commercial system for opening accounts as claimed in claim 24, wherein the commercial trading server determines the selection method of the authentication combination according to the dollar amount of the transaction.

26. An electronic commercial system for opening accounts as claimed in claim 25, wherein the commercial trading server changes the authentication combination periodically.

27. An electronic commercial system for opening accounts as claimed in claim 20, wherein the commercial trading server changes the authentication combination each time the electronic trading process is run at the user end, identifying the financial account the next time the electronic trading process is run nat the user end.

28. An electronic commercial system for opening accounts as claimed in claim 27, wherein the password is numeric code, text code, biometric identifying feature, or a combination thereof.

29. An electronic commercial system for opening accounts as claimed in claim 28, wherein the user end uses a mobile phone, mobile PDA, a computer device with mobile phone, or a combination thereof as the communication interface for the mobile communication device.

30. An electronic commercial system for opening accounts as claimed in claim 28, wherein the user end uses GSM, CDMA, DAMPS, CT2, DECT, PACS, or PHS for the first and second mobile communication devices.

31. An electronic commercial trading system, comprising:
first and second digital mobile communication device, having first and second identification numbers;
a commercial trading server, for executing the following process by first and second user ends:
(a) executing an electronic process of opening accounts, comprising:
entering a commercial trading server individually from the first
and second user ends using the first and second digital mobile
communication devices;
setting first and second passwords (PIN) to the commercial trading server through the first and second mobile communication devices;
providing first and second financial accounts to the first and
second user ends according to the first and second identification numbers and the first and second passwords; and
(b) executing an electronic trading process, comprising:
entering into the commercial trading server from the first user end using the first mobile digital communication device to send the first financial account to the commercial trading server to identify the first financial account;
inputting the second financial account of the second user end, dollar amount of the transaction, and the first password to the commercial trading server from the first user end using the first mobile communication device to complete the trade.

32. An electronic commercial trading system as claimed in claim 31, wherein each of the first and second passwords is numeric code, text code, biometric identifying feature, or a combination thereof.

33. An electronic commercial trading system as claimed in claim 31, wherein the first and second user end use mobile phone, mobile PDA, a computer device with mobile phone as communication interface, or a combination thereof for the first and second mobile communication devices.

34. An electronic commercial trading system as claimed in claim 31, wherein the first and second user ends use GSM, CDMA, DAMPS, CT2, DECT, PACS, or PHS for the first and second mobile communication devices.

35. An electronic commercial trading system, comprising:
a computer device;
first and second digital mobile communication device, having first
and second identification numbers;
a commercial trading server, for executing process by first and second
user ends, the process comprising:
(a) executing an electronic process of opening accounts, comprising:
entering a commercial trading server individually from the first and
second user ends using the first and second digital mobile
communication devices;
setting first and second passwords (PIN) to the commercial trading server through the first and second mobile communication devices;
providing first and second financial accounts to the first and second
user ends according to the first and second identification numbers
and the first and second passwords; and
(b) executing an electronic trading process, comprising:
entering into the commercial trading server from the first user end using the computer device to send the first financial account, the second financial account, and the dollar amount of the transaction to the commercial trading server to identify the first financial account; sending an inquiry message to the first digital mobile communication device from the commercial trading server through a mobile communication network;
sending the first identification number to the commercial trading server from the first user end using the first digital mobile communication device such that the commercial trading server identifies the first financial account;
inputting preset trading information and the password to the commercial trading server from the first user end using the first digital mobile communication device to complete the trade.

36. An electronic commercial trading system as claimed in claim 35, wherein each of the first and second passwords is numeric code, text code, biometric identifying feature, or a combination thereof.

37. An electronic commercial trading system as claimed in claim 35, wherein the first and second user ends use a mobile phone, mobile PDA, a computer device with mobile phone as communication interface, or a combination thereof for the first and second mobile communication devices.

38. An electronic commercial trading system as claimed in claim 35, wherein the first and second user ends use GSM, CDMA, DAMPS, CT2, DECT, PACS, or PHS for the first and second mobile communication devices.
